# EUROPEAN PATENT APPLICATION

(11) **EP 2 316 633 A1**
(43) Date of publication of application: **04.05.2011**
(21) Application number: 09809483.2
(22) Date of filing: 05.08.2009
(51) Int. Cl.: B29C 45/26, B29C 45/00, B29C 45/37, F24D 3/14

(54) **RESIN MOLDING, AND METHOD FOR MANUFACTURING SAME**

(30) Priority: 29.08.2008 JP 2008221058
(71) Applicant: RP Topla Limited, Suita-shi Osaka 564-0063 (JP)
(72) Inventor: SAKAMOTO, Tomoyoshi, Ota-shi Gunma 373-0805 (JP); HATA, Yasuhiko, Ota-shi Gunma 373-0805 (JP); MINEZAKI, Hiroyuki, Ota-shi Gunma 373-0805 (JP); KATAGIRI, Hiroki, Ota-shi Gunma 373-0805 (JP); OJIRO, Minoru, Ota-shi Gunma 373-0805 (JP)
(74) Representative: Jolly, Mark Edward
(86) International application number: PCT/JP2009/003737
(87) International publication number: WO 2010/023826

(57) **Abstract**

A resin molded body can give a heat-insulating or radiation function of providing extremely good heat transfer, has high reliability, and is manufactured witch a simple process at low cost.

The resin molded body is formed by integrally injection molding of a pipe portion (1), which has ant least a curved portion (3) and passes a fluid therethrough, and a flat plate portion (4).

## Description

### Technical Field

This invention relates to a resin molded body, in which a pipe portion and a flat plate portion are integrally injection molded, and a method for manufacturing the resin molded body, and more specifically relates to a resin molded body, which is operated as a heat-insulating plate or a radiator plate by passing a fluid through the pipe portion, and a method for manufacturing the resin molded body.

### Background Art

In the prior are floor heating system having a heat-insulating function, as shown in Patent Document 1 and 2, for example, a complex of a pipe through which hot water is flowed, a hot water mat incorporated with the pipe or the like, and a floor material has been generally used,

Further, as a warm-water toilet seat, Patent Document 3 introduces an example in which an electrically-heated wire for keeping warmth is incorporated into a space between a cover plate and a base plate formed of a resin molded body to give a function of keeping warmth of the toilet seat.

Recently, in an automotive field, since a temperature in an engine room is increased due to performance improvement and environmental response, it has become an important issue to give a function of dissipating the heat of, for example, covers such as an engine head cover. In order to realize this issue, it has been proposed to increase the radiation efficiency by increasing a surface area from a design standpoint or by using a high thermal conducting material.

As a computer and a video apparatus become thinner and realize high performance, we are in urgent need of correspondence to internal heat generation of the apparatus. As a measure thereof, there has been proposed to utilize a radiation material in a housing of the apparatus, for example.

### Prior Art Documents

### Patent Documents

[Patent Document 1] Japanese Patent No. 3947527
[Patent Document. 2] Japanese Patent Application Laid-Open No. 7-217920
[Patent Document 3] Japanese Patent No. 3048413

### Disclosure of the Invention

### Problems to be Solved by the Invention

However, in the floor heating system disclosed in the Patent Documents 1 and 2, the pipe through which hot water passes and the hot water mat or the floor material are separate members. It takes a considerably high cost to unify and assemble those separate members. Since the pipe and the hot water mat or the floor material are not assembled so as to be completely fixed firmly to each other, there is a problem that the heat conducting efficiency is low.

The warm-water toilet seat disclosed in the Patent Document 3 is obtained by a combination of two resin molded bodies including a toilet seat cover plate and a base plate and a sheet heating element, and the assembly cost is required. It is inevitable that there is a gap between the heating element and the cover plate, so that the thermal efficiency is low.

It is not enough for an engine cover of a vehicle, housings c7f home appliances and OA equipment, and so forth, to give the radiation function from a material 1 standpoint or at design standpoint as described above, and this remains an issue.

Accordingly, an object of this invention is to provide a resin molded body, which can give a heat-insulating or radiation function of providing extremely good heat transfer, has high reliability, and is manufactured with a simple process at low cost, and a method for manufacturing the resin molded body.

### Means for Solving the Problem

Namely, the resin molded body of this invention is characterized by being formed by integral injection molding of a pipe portion, which has at least a curved portion and flows a fluid therethrough, and a flat plate portion.

A method of manufacturing a resin molded body, according to the invention is characterized by including injecting a molten resin into a pipe cavity of a mold, the pipe cavity having on its end a pressure port provided with a floating core and on its other end an outlet, pressure-injecting a pressurized fluid through the pressure port after the injection of the molten resin, and moving the floating core toward the outlet, and, at the same time, extruding the molten resin from the outlet.

### Effect of the Invention

In the resin molded body of this invention, a fluid is passed through a pipe portion of the resin molded body, whereby the resin molded body is operated as a hcat-insulating plate or a radiator plate. Since the pipe portion and a flat plate portion are integrally injection molded in the resin molded body, the resin molded body provides extremely good heat transfer, is free from leakage of the fluid, and requires no assembly cost.

### Brief Description of the Drawings

FIG . 1 is a perspective view showing an example of a resin molded body of this invention;
FIG. 2 is a view showing an example of a mold used in a manufacturing method of this invention;
FIG. 3 is an explanatory view of the manufacturing method of this invention and showing a state in which a cavity is filled with a molten resin;
FIG. 4 is an explanatory view of the manufacturing method of this invention and showing a state in which a floating core is moved by pressure-injection of a pressurized fluid, and the cavity storing an excess resin is filled with a resin;
E`IG. 5 is a view showing an inner diameter measurement point in an example 1; and
FIG. 6 is a view showing a temperature measurement point in the example 1.

### Best Mode for Carrying Out the Invention

Hereinafter, this invention will be described in detail using drawings.

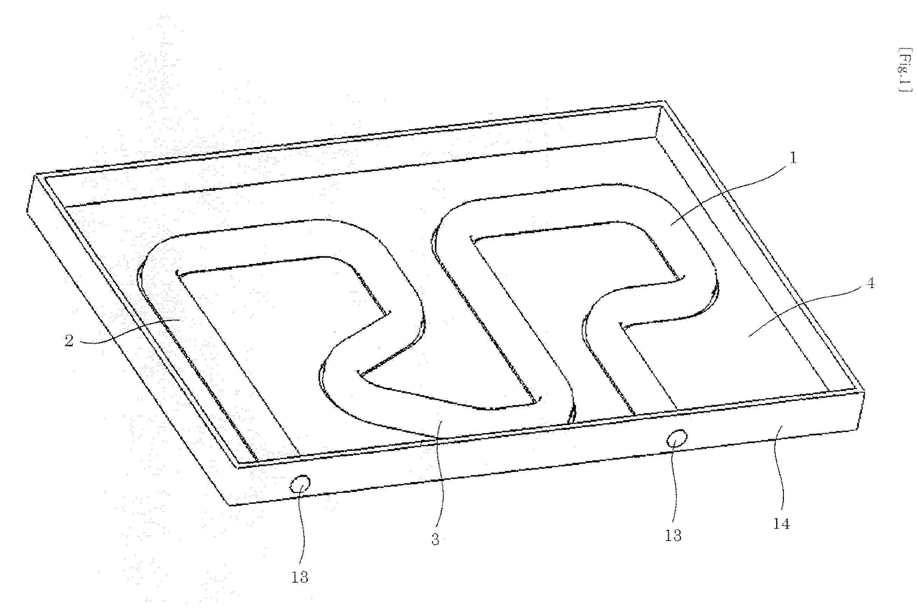

FIG. 1 is a perspective view showing an example of a resin molded body of this invention.

In the resin molded body shown in FIG. 1, a pipe portion 1 has straight portions 2 and curved portions 3 provided continuously and has a shape of alphabets "RP". The pipe portion 1 is provided on a flat plate portion 4. The end of the pipe portion 1 is connected to one of side plate portions 14 standing from the ends of the flat plate portion 4. The side plate portion 14 connected to the end of the pipe portion 1 has an outlet/inlet hole 13 having a diameter equivalent to the inner diameter a the pipe portion 1, whereby the pipe portion 1 provides a pipe path through which a fluid passes.

In order to allow a fluid such as a heating medium and a cooling medium to pass through the pipe portion 1, the pipe portion :1 preferably has a circular shape in the cross section of the hollow, and when an average inner diameter of the pipe is Φ, and maximum diameter - minimum diameter = R, the variation of the inner diameter R/Φ×100 (%) is preferably not more than 20%*.* Namely, in order to flow the fluid smoothly, it is preferable that the cross section of the hollow of the pipe portion 1 has a circular shape, and the variation is small. The pipe portion 1 is subjected to an internal pressure for flowing the fluid, so that it is preferable that the thickness of the pipe portion 1 is even as much as possible at the request of design.

Since a resin molded product shown in FIG. 1 is formed by integrally injection molding, there is no welded portion or joint between the pipe portion 1, the flat plate portion 4, and the side plate portions 14. Although the side plate portions 14 are not indispensable, the side plate portions 14 are preferably provided in terms of improving the strength of the molded body.

Although the resin used in this invention includes any type of thermoplastic resin and thermosetting resin capable of injection molding of a hollow body, the thermoplastic resin is preferably used in terms of hollow moldability in the injection molding. The thermoplastic resin includes various resins such as polystyrene, a polystyrene-based resin such as AS and ABS, a polyolefin-based resin such as polypropylene and polyethylene, a polyamicle-based resin such as nylon 66 and nylon 6, a polyester-based resin such as PET and PBT, POM, polycarbonate, PPS, modified PPE, a PMMA resin, and a polyvinyl chloride resin. Further, there may be used those thermoplastic resins containing a reinforcing material, such as glass fiber, talc, calcium carbonate, and kaolin, or an inorganic filler. As the thermosetting resin, unsaturated polyester resin and phenol resin may be used, for example, if they are injection moldable thermosetting resins known as BCM. Moreover, recently, high thermal conductive resin or the like is available and is an example of a preferred resin of this invention.

In the resin molded body of this invention, a heating and heat-insulating medium such as hot water is passed as a fluid through the pipe portion 1, whereby the flat plate portion 4 can be evenly and efficiently heated and heat-insulated and is operated as a heat-insulating plate. Thus, the resin molded body can be suitably used in, for example, a resin molded body for household equipment having a heating and heat-insulating function, such as a wall and a floor heating and a heat-insulation toilet seat.

Meanwhile, a cooling medium such as cooling water and an antifreeze liquid is passed as or fluid through the pipe portion 1, whereby the flat plate portion 4 can be evenly and efficiently cooled and is operated as a radiator plate. Thus, the resin molded body of this invention can be suitably used in, for example, housings of various home appliances and OA equipment with the task of internal heat generation and an engine cover of a vehicle.

Since the resin molded body of this invention is obtained by integrally injection molding the pipe portion 1 and the flat plate portion 4, the resin molded body provides extremely good heat transfer, that is, has high heat efficiency or radiation efficiency. Since the resin molded body is obtained by integrally injection molding, no assembly cost is required, so that it is advantageous in terms of cost, and, at the same time, leakage of the fluid does not occur. Further, the pipe portion 1 can be molded without using a joint and welding means. The pipe portion 1 can be disposed two-dimensionally or three-dimensionally, so that the degree of freedom of design is high.

The resin molded body of this invention may be used alone; however, when the resin molded body of this invention is one unit, a plurality of pipes are connected by joints or the like, whereby each area of floor heatings of large to mall sizes is covered, for example, so that the degree of freedom of design can be increased, and maintenance can be facilitated.

Next, a method of manufacturing a resin molded body of this invention will be described.

The method of manufacturing a resin molded body of this invention includes a gas assist injection molding method (for example, Japanese Examined Patent Publication No. 57-14968), water-assist injection molding (for example, plastic age (September 2007, page 106)), and a method using a floating core (fop example, Japanese Examined Patent Publication. No. 7-20646). In order to maintain uniformity of the inner diameter of a pipe over the entire area of the pipe, the injection molding method using a floating core is preferably used. More preferred is an injection molding method including a process of injecting a molten resin into a pipe cavity of a mold, the pipe cavity having on its one end a pressure port provided with a floating core and on its other end an outlet, pressure-injecting a pressurized fluid through the pressure port after the injection of the molten resin, and moving the floating core toward the outlet, and, at the same time, extruding the molten resin from the outlet.

Hereinafter, a method for manufacturing a resin molded body of FIG. 1 using a floating core will be described.

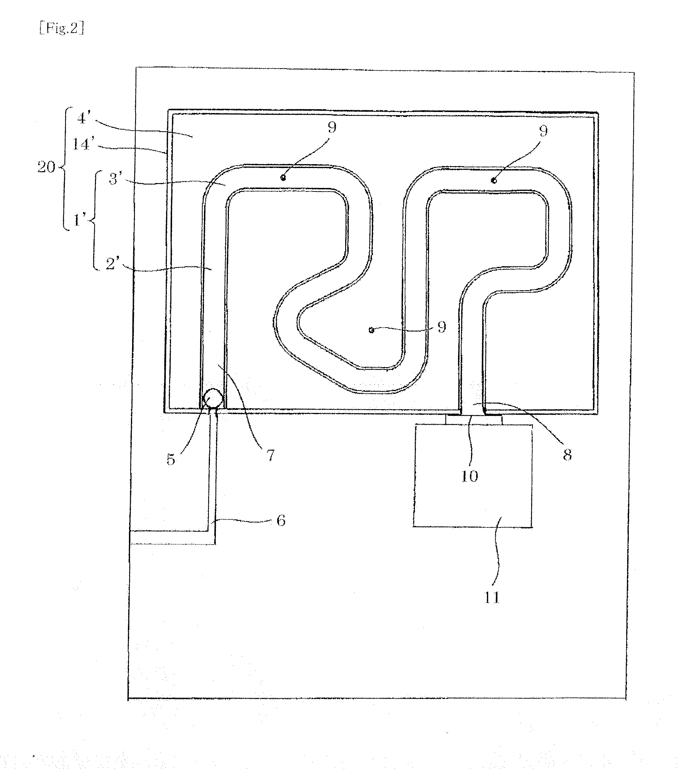

FIG. 2 is a view showing an example of a mold used in this invention.

Shown in FIG. 2, the mold has a cavity 20 including a pipe portion cavity 1' including straight portion cavities 2' and curved portion cavities 3' , a flat plate portion cavity 4', and a side plate portion cavity 14' and having a shape following the outer shape of the molded body.

An wend 7 of the pipe portion cavity 1' is provided with a floating core 5 and a pressure port 6. The floating core 5 has a diameter corresponding to the inner diameter of the pipe portion 1. A pressurized fluid, for pressing and moving the floating core 5 toward the other end 8 of the pipe portion cavity 1' is pressure-injected through the pressure port 6.

The floating core 5 is provided in the pipe portion cavity 1' so that its back faces the pressure port 6, whereby the floating core 5 can be pressed by the pressurized fluid pressure-injected through the pressure port 6. The floating core 5 can be formed of a metal, such as copper, iron, aluminum, stainless, and steel, or can be formed of a resin. The shape of the floating core 5 may have a shape other than the spherical shape shown in FIG. 2, such as a conical shape, a bullet shape, and a hemispherical shape as long as the maximum diameter corresponds to the inner diameter of the pipe portion 1.

The pressure por 6 is connected to a pressurized fluid system (not shown) for pressure-injecting/discharging a pressurized fluid. The pressure port 6 is used for applying the pressurized fluid, supplied from the pressurized fluid system, to the back surface the floating core and dressing and moving the floating core 5 toward the other end 8 of the pipe portion cavity 1'. The pressurized fluid is pressure-injected through the pressure port 6 after the inside of the cavity 20 is filled with a resin. A resin gate 9 is provided at a position slightly apart from the floating core 5 so that in the injection of the molten resin through the resin gate 9, while the floating core 5 is pressed against the pressure port 6 without floating, the inside of the cavity 20 can be filled with the molten resin.

The pipe portion cavity 1' has on the other end 8 side a communicating port 10, and an excess resin storage cavity 11 is communicated with the pipe portion cavity 1' through the communicating port 10. Although the communicating port. 10 has a size allowing the passage of the floating core 5, it, is preferable that the communicating port 10 has a sightly constricted shape for ease of, for example, the cutting process to be performed later. When the pressurized fluid is pressure-injected through the pressure port 6 in such a state that the cavity 20 is filled with a resin, the floating core 5 is moved, whereby an excess resin is extruded from the pipe portion cavity 1'. The excess resin storage cavity 11 has a capacity capable of satisfactorily storing the excess resin and the floating core 5.

Although the means that opens and closes the communicating port 10 is not limited especially, there is means that opens and closes the communicating port 10 by moving a receiving shaft forward and backward by means of, for example, hydraulic pressure. Specifically, the receiving shaft passes through substantially the central portion of the excess resin storage cavity us to be retractably inserted toward the communicating port 10. When the receiving shaft advances, the peripheral edge of the front end is in tress contact with the peripheral wall of the communicating port 10 to close the communicating port 10. The deceiving shaft moves forward and backward, whereby the communicating port 10 is opener and closed. Alternatively, there can be adopted a method of opening and closing the communicating port 10 by means of, for example, hydraulic pressure, using a simply slidably opening and closing bar or the like.

Next, a specific procedure of injection molding using the mold shown in FIG. 2 will be described.

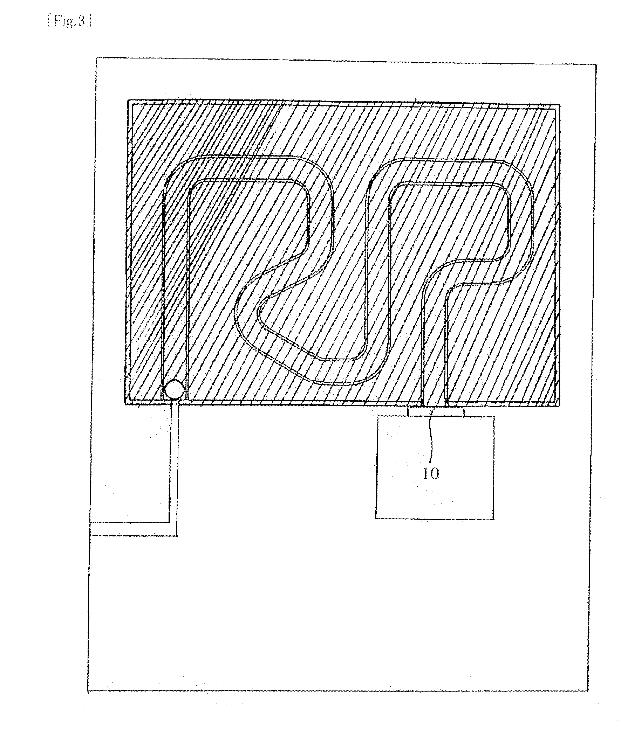

As shown in FIG. 3, a molten resin is first injected in such a state that the communicating port 10 is closed. The molten resin can be injected using a well-known injection molding apparatus.

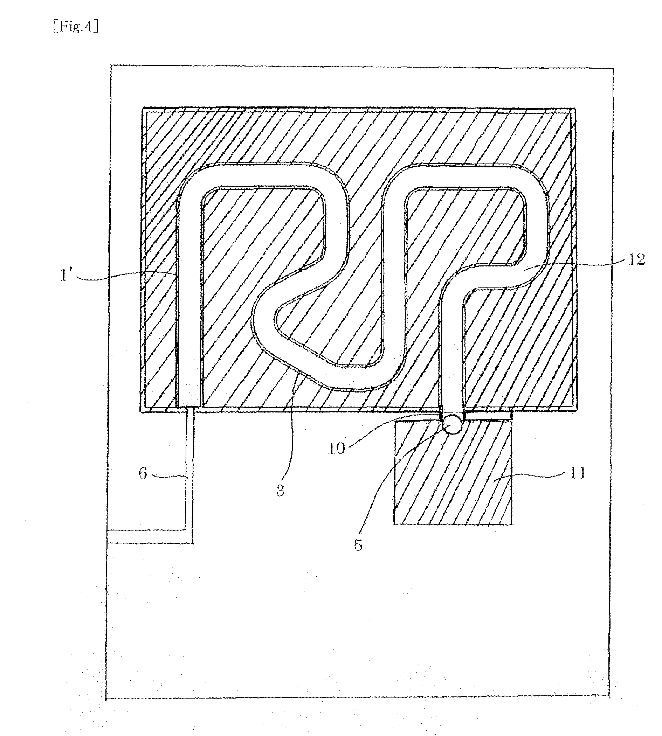

Then, as shown in FIG. 4, the communicating port 10 is opened, and, at the same time, the pressurized fluid is pressure-injected through the pressure port 6, whereby the floating core 5 advances toward the excess resin storage cavity 11 so as to push out a slowly solidified molten resin of the center portion of the pipe portion cavity 1' into the excess resin storage cavity 11 through the communicating port 10, while remaining a resin of the outer peripheral portion of the pipe portion cavity 1', which starts to be solidified by cooling or heating. Eventually, the floating core 5 enters into the excess resin storage cavity 11, and the excess resin storage cavity 11 is filled with the resin pushed out through the communicating port 10. After the floating core 5 has passed through the pipe portion cavity 1', a hollow 12 having a diameter substantially the same as the diameter of the floating core 5 is formed. Accordingly, the diameter of the hollow 12 to be formed can be adjusted by selecting the diameter of the floating core 5. The resin of a portion at which the hollow 12 is formed is pressed against the peripheral wall surface of the pipe portion cavity 1' by the pressure of the pressure-injected pressurized fluid, and the shape of the hollow 12 is maintained.

As the pressurized fluid, there is used a gas or liquid that does not react with or is not compatible with the resin to be used under injection molding temperature and pressure conditions. Specifically, nitrogen gas, carbon dioxide gas, air, glycerin, liquid paraffin, and so on can be used; however, an inert gas containing nitrogen gas is preferably used. In the pressure-injection of the pressurized fluid, when a gas such as nitrogen gas is used as the pressurized fluid, for instance, a pressurized gas as the pressurized fluid, whose pressure is raised by a compressor, is previously stored in an accumulator (not shown), and the pressurized gas is introduced into the pressure port 6 through a pipe, whereby the pressurized gas can be pressure-injected. Alternatively, the pressurized gas whose pressure is raised by a compressor is directly supplied to the pressure port 6, whereby the pressurized gas can be pressure-injected. Although the pressure of the pressurized gas supplied to the pressure port 6 is different depending on the kind of a resin to be used and the size of the floating core 5, it is usually approximately 4.90 to 29.42 MPa (50 to 300 kg/cm²G).

Subsequently, preferably, the resin is cooled while maintaining the inner pressure in the mold, and the pressurized fluid in the hollow 12 is discharged; thereafter, a molded product is removed. When a gas is used as the pressurized fluid, the pressurized fluid can be discharged by opening the pressure port 6 to the atmosphere. The pressurized fluid may be recovered into a recovery tank (not shown) for circulation utilization.

A secondary molded product (not shown) molded in the excess resin storage cavity 11 is separated from the removed molded product, whereby the resin molded body of this invention can be obtained. Although the secondary molded product can be easily separated by, for example, being cut near the communicating port, the communicating port 10 is previously formed into a constricted shape, whereby the secondary molded product can be more easily cut off to be separated.

### Examples

### <Example 1>

The resin molded product of the following size shown in Fig. 1 is integrally molded by an injection machine ("TP-180H" from Toyo Machinery & Metal Co., Ltd.), using the mold shown in FIG. 2.

### [Pipe portion]

Outer diameter: 7 mm
Inner diameter: 4.5 mm
Thickness: 1.25 mm
Length: 200 mm.

### [Flat plate portion]

10 mm × 150 mm
Thickness: 1. 5 mm

As the floating core, a steel ball with a diameter of 4.5 mm is used, and a gas four gas hollow injection molding ("air mold" from Asahi Engineering Co., Ltd.) is used for the supply of a pressurized fluid. As the pressurized fluid, nitrogen gas is used. As a resin, a polyamide 66 resin ("LEONA 1300G" from Asahi Kasei Chemicals Corporation) containing 33% by wight of glass fiber is used.

First, as shown in FIG. 3, the resin is injected at a resin temperature of 260°C and an injection pressure of 11.77 MPa (120 kg/cm²). After a lapse of 1 second from the completion of injection, nitrogen gas with a pressure of 22.56 MPa (230 kg/cm²) is pressure-injected. Then, the floating core is moved in the mold as shown in FIG. 4 . After the resin is cooled for 30 seconds, the resin molded body shown in Fig. 1 is taken out.

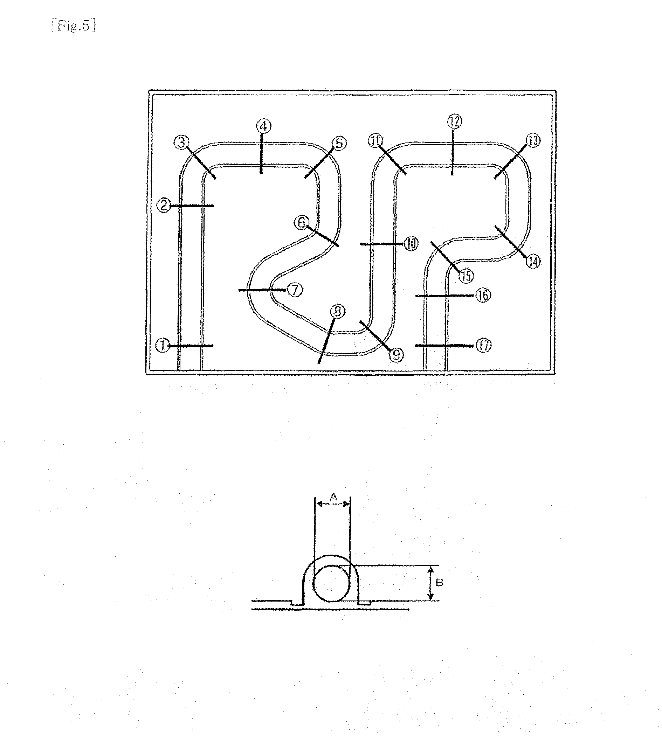

As shown in FIG. 5, when the inner diameters A and B are measured at 17 points, the average inner diameter Φ is 4.74 mm, the maximum inner diameter is 4.94 mm, the minimum inner diameter is 4.59 mm, and R = 0.35 mm. The variation of the inner diameter R/Φ × 100 (%) is 7%, and this is a variation range without causing a practical problem.

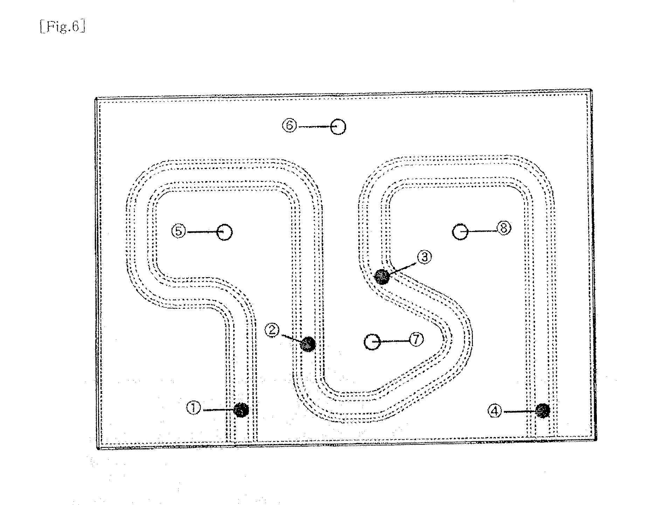

When hot water of 60°C is flowed from one side of the pipe portion of the obtained molded product to be discharged from the other side, the average temperature of the flat plate portion is 32°C, and the average temperature of the pipe portion is 54°C. Thus, the obtained molded product is suitable as a unit for heat-insulating. The temperature ifs measured at 8 points shown in FIG. 6. The average temperature is obtained by averaging the temperatures measured at the four points of the pipe portion (1 to 4) and the temperatures measured at the four points of the flat plate portion (5 to 8). When the durability is tested under such conditions that the hot water of 60°C is flowed for 2000 hours while being subjected to the inner pressure of 0.15 MPa (1.5 kg/cm²), the resin molded product is highly durable without causing the increase of the resistance to flow, the occurrence of cracks, and so on.

### <example 2>

A molded product is obtained, using a PPS resin ("Torelina high thermal conducting material SH01 from Toray Industries, Inc.) as a resin, in a similar manner to the example, 1, except that the resin temperature is 32°C.

When cooling water of 5°C is flowed from one side of the pipe portion of the obtained molded product to be discharged from the other side, the average temperature of the flat plate portion is 18°C, and the molded product exhibit satisfactory performance as a unit for radiation.

### Industrial Applicability

The resin molded body of this invention is preferably used as, for example, a resin molded body for household equipment having a heat-insulating function, such as a wall and a floor heating, a resin molded body for automobile parts required to have a function of cooling and dissipating the heat of, for example, a cylinder head cover of a vehicle exposed to high temperature, and a resin molded body for home appliances and OA equipment required to have a function of cooling and dissipating the heat ot a computer and so on.

### Description of the Reference Numerals

1 Pipe portion
1' Pipe portion cavity
2 Straight portion
2' Straight portion cavity
3 Curved portion
3' Curved portion cavity
4 Flat plate portion
4' Flat plate portion cavity
5 Floating core
6 Pressure port
7 One end of cavity
8 The other end of cavity
9 Injection gate
10 Communicating port
11 Excess resin storage cavity
12 Hollow
13 Outlet/inlet hole
14 Side plate portions
14' Side plate portion cavity
20 Cavity

## Claims

1. A resin molded body **characterized by** being formed by integrally injection molding of a pipe portion, which has at least a curved portion and passes a fluid therethrough, and a flat plate portion.

2. The resin molded body according to claim 1, **characterized in that** a hollow of the pipe portion has a circular shape in cross section.

3. The resin molded body according to claim 1 or 2, **characterized in that** an inner diameter of the pipe portions does not substantially vary.

4. A heat-insulating plate **characterized by** comprising the resin molded body according to many one of claims 1 to 3.

5. A radiator plate **characterized** bey comprising the resin molded body according to any one of claims 1 to 3.

6. A method of manufacturing the resin molded body according to any one of claims to 3, **characterized by** comprising the steps of injecting a molten resin into a pipe cavity of a mold, the pipe cavity having on its one end a pressure port comprising a floating core and on its other end an outlet, pressure-injecting a pressurized fluid through the pressure port after the injection of the molten resin, and moving the floating core toward the outlet, and, at the same time, extruding the molten resin from the outlet.
